# EUROPÄISCHE PATENTANMELDUNG

(11) **EP 0 742 500 A2**
(43) Veröffentlichungstag der Anmeldung: **13.11.1996**
(21) Anmeldenummer: 96107440.8
(22) Anmeldetag: 10.05.1996
(51) Int. Cl.: G05B 19/042

(54) **Sichere Tipptasten- und Schalterfunktionen mit Fehleraufdeckung**

(30) Priorität: 11.05.1995 DE 19517377
(71) Anmelder: SIEMENS AKTIENGESELLSCHAFT, 80333 München (DE)
(72) Erfinder: Hauf, Ronald, Dipl.-Ing., 91096 Möhrendorf (DE); Balling, Gerold, Dipl.-Ing.(FH), 91056 Erlangen (DE); Rumpler, Gerhard, Dipl.-Ing., 91056 Erlangen (DE); Schneider, Paul, Dipl.-Ing., 96052 Bamberg (DE); Böhm,Manfred, Dipl.-Ing., 91362 Pretzfeld (DE); Hertinger, Klaus, Ing.(FH), 91056 Erlangen (DE); Schick, Ludwig, 91091 Grossenseebach (DE)

(57) **Zusammenfassung**

Signale sicherheitsrelevanter Tipptasten und Schalter werden über Eingangsbausteine auf der Senderseite am Bediengerät in sicherer Technik eingekoppelt und vor der Datenübertragung zur Sicherung mit einer spezifischen Signatur versehen. Auf der Empfängerseite werden mindestens zwei Rechner (NC und PLC) diese aus und prüfen diese auf Plausibilität. Die Rechner prüfen sich gegenseitig über einen kreuzweisen Datenund Ergebnisvergleich. Betrachtet wird immer der gesamte Funktionskomplex, nicht nur das Auslösen von Tasten- oder Schalterelementen. Damit ergeben sich sichere Tipptasten und Schalterfunktionen, bei denen auch schlafende Fehler aufgedeckt werden.

## Beschreibung

Die Erfindung betrifft ein Verfahren sowie eine dazugehörige Vorrichtung zur Realisierung von sicheren Tipptasten- und Schalterfunktionen mit Fehleraufdeckung an Bediengeräten industrieller Steuerungen.

Die Anforderungen an die Sicherheit von industriellen Maschinen haben sich verschärft, seit die neue EG-Maschinenrichtlinie in Kraft getreten ist. Damit sind auch die Anforderungen an die Ausgestaltung von industriellen Steuerungen und deren Sicherheitseinrichtungen wie beispielsweise Not-Aus-Schalter etc. gestiegen.

Zur Erfüllung der durch beispielsweise die EG- Maschinenrichtlinie geforderten Sicherheitsanforderungen sind die heute gebräuchlichen technischen Lösungen nur bedingt geeignet. Sie sind nicht praxisgerecht und geben daher immer wieder Anlaß zur Manipulation von Schutzeinrichtungen.

Auch Tipptasten- und Schalterfunktionen an Bediengeräten (wie z.B. Bedientafeln, Bedien- und Programmierhandgeräten) für Werkzeugmaschinen, Roboter und Sondermaschinen sind heute nicht in sicherer Technik aufgebaut. Durch ein Versagen der Tasten-/Schaltermechanik oder der nachfolgenden Auswertelektronik, sowie durch Kurzschlüsse an Verbindungsleitungen kann eine Funktion ungewollt ausgelöst oder eine gewollt ausgelöste Funktion nicht mehr gestoppt werden. Dies kann zu gefahrbringenden Situationen für Mensch und Maschine führen. Beispiele für Funktionen die zu gefahrbringenden Situationen führen können sind zum Beispiel:
- Verfahrtasten
- Stopp-Tasten
- Not-Aus-Schalter
- Betriebsartenanwahl
- Programmstart im Testbetrieb
- Zustimmfunktion
- öffnen oder schließen von Greifersystemen bei Robotern

Einige der oben genannten Tastenfunktionen werden in der Betriebsart 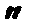 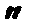 Einrichten" oder 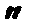 Testen" im sogenannten 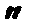 Totmannbetrieb" ( der Begriff entstammt der Bahntechnik ) verwendet. Nach dem Loslassen der Taste wird erwartet, daß die ausgeloste Funktion ohne zusätzliche Aktionen bestmöglich gestoppt wird.

Bedingt durch die nicht sicheren Tipptasten- und Schalterfunktionen und dem Fehlen von wirksamen Sicherheitsfunktionen gibt es heute noch erhebliche Einschränkungen bei der Bedienung der Maschine in den verschiedenen Betriebsarten.

Durch die Weiterentwicklung der Bewegungsführung in industriellen Steuerungssystemen wie z.B. Werkzeugmaschinen, Robotern oder dergleichen durch Spline- oder NURBS-Funktionen ist der Programmtest im 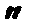 Einzelsatz" in der Betriebsart 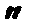 Testen" technisch nicht mehr sinnvoll. Einen Satzwechsel im herkömmlichen Sinne gibt es bei diesen Spezialfunktionen nicht mehr. Das Abfahren einer kompletten Programmsequenz ist heute nicht zulässig. Programme an solchen Maschinen können heute nur noch durch die Definition von Sonderbetriebsarten praxisgerecht getestet und bedient werden. Da es hierfür noch keine Sicherheitsfunktionen gibt, sind die Bediener jedoch einem höheren Risiko ausgesetzt.

Auch die Fertigung von teueren Teilen mit der Losgröße 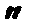 1" stellt besondere Bedingungen an die Bedienbarkeit. In diesem Falle verschmilzt der Programmtest mit der eigentlichen Produktion.

Keine der zugelassenen, in den Normen beschriebenen, Standard-Betriebsarten wird heute diesen Anforderungen gerecht. Immer mehr unerwünschte Sonderbetriebsarten mit dafür erforderlichen Ausnahmegenehmigungen sind die Folge.

Herkömmlicherweise wurde mit Not-Aus-Schaltern, Zustimmtastern und reduzierten Geschwindigkeiten in Verbindung mit verschiedenen Betriebsarten versucht, die Sicherheit zu gewährleisten und das Restrisiko zu verringern. Meist wurde für den Bediener das erhöhte Restrisiko als gegeben hingenommen, da es keine andere Lösungsmöglichkeit gab.

Sichere Tipptasten- und Schalterfunktionen existieren jedoch derzeit noch nicht. Dies gilt auch und vor allem für Bediengeräte industrieller Maschinen wie Werkzeugmaschinen, Roboter und Sondermaschinen.

Um die Risiken von nicht sicheren Tasten und Schaltern zu reduzieren, müssen herkömmlicherweise an Bediengeraten Not-Aus-Schalter und an Bedien- und Programmierhandgeräten zusätzlich Zustimmtaster angebracht sein. Die Betätigung der Noteinrichtungen erfordert jedoch immer eine Aktion des Bedieners, die zeitlich nicht im Verhältnis zum Beschleunigungsvermögen von hochdynamischen Antrieben steht.

Zudem haben speziell Zustimmtaster heutiger Bauart und Wirkungsweise beim Bediener nur eine geringe Akzeptanz, da hiermit der Arbeitsablauf erheblich eingeschränkt wird und die Hand des Bedieners beim Betätigen des Tasters nach einer relativ kurzen Zeit ermüdet. Zustimmtaster müssen heute noch direkt über Hardware auf die Antriebselektronik wirken. Der große Nachteil ist, daß nach dem Loslassen des Zustimmtasters und nach dem Bremsvorgang bisher beispielsweise bei elektrisch angetriebenen industriellen Maschinen immer eine Energietrennung zwischen Umrichter und Motor erfolgen muß.

Stopp-Tasten sowie Not-Aus-Schalter sind heute noch überwiegend mit nur einer Kontaktebene ausgerüstet. Diese werden nach dem Ruhestromprinzip betrieben und sind daher als Öffnerkontakte ausgelegt. Wenn zwischen den beiden Verbindungsleitungen ein Kurzschluß entsteht, ist der Öffnerkontakt überbrückt. Die Sicherheitsfunktion ist außer Kraft gesetzt, ohne das eine Fehleraufdeckung in einem vorgegebenen Zeitrahmen gewährleistet ist. Man spricht in diesem Fall auch von einem 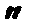 schlafenden Fehler".

Die Sicherheit für bedienende Personen und auch die Schutzziele der EG-Maschinenrichtlinie können somit mit den herkömmlichen Verfahren und Vorrichtungen nicht befriedigend erfüllt werden.

Heutige Not-Aus-Schalter an Bedien- oder Programmierhandgeräten müssen durch zusätzliche Leitungen im Verbindungskabel an den übergeordneten Not-Aus-Kreis (meist 24V) angeschlossen werden. Der Not-Aus-Kreis ist wie der Zustimmtaster noch überwiegend in externer Hardware ausgeführt und wirkt direkt auf die Antriebselektronik. Diese Lösung ist aufwendig und kostenintensiv.

In den unterschiedlichen Betriebsarten industrieller Steuerungen sind nur fest definierte Abläufe und Prozeßparameter zulässig.
- 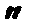 Einrichten"
   In der Betriebsart 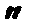 Einrichten" dürfen die Antriebe nach den heute gültigen Normen ausschließlich nur mit den Handverfahrtasten oder dem Handrad in Verbindung mit einem Zustimmtaster und reduzierter Geschwindigkeit bewegt werden. Verfahren über Programmstart, auch im Einzelsatz, ist nicht zulässig. Der Bediener hält sich dabei zeitweise im Gefahrenbereich der Maschine auf.
- 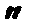 Testen"
   In der Betriebsart 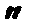 Testen" dürfen die Antriebe nach den heute gültigen Normen nur im 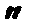 Einzelsatz" und in Verbindung mit einem Zustimmtaster und reduzierter Geschwindigkeit bewegt werden. Verfahren von kompletten Programmsequenzen (Satzfolge) über Programmstart mit Totmannfunktion ist nicht zulässig. Die Schutzeinrichtungen (z.B. Schutztür) sind teilweise geöffnet. Der Bediener hält sich zeitweise im Gefahrenbereich der Maschine an einem 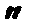 sicheren Standort" auf.
- 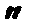 Sonderbetriebsart"
   Sonderbetriebsarten sind nur mit Ausnahmegenehmigung von autorisierten Stellen wie z.B. der Berufsgenossenschaft oder dem TÜV möglich. Es werden maschinen- und prozeßspezifische Bedienabläufe in Verbindung mit speziellen Auflagen genehmigt. Gültige Normen lassen hier im allgemeinen keine Lösungsmöglichkeiten offen.
- 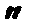 Automatik"
   In der Betriebsart 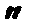 Automatik" darf die Maschine nach den heute gültigen Normen mit vollen Prozeßparametern gefahren werden. Die Schutzeinrichtungen sind geschlossen. Der Bediener befindet sich außerhalb des Gefahrenbereiches.

Anhand dieser Aufstellung wird deutlich, daß trotz der heute möglichen und üblichen Schutzmaßnahmen unbefriedigende Situationen mit eingeschränkter Sicherheit bestehen bleiben. Treten Fehler, wie bereits im vorangehenden geschildert, innerhalb der Sicherheitsvorrichtungen auf, so werden diese mit der herkömmlichen Technik häufig nicht erkannt und versagen dann im Bedarfsfall ihren Dienst. Auch sind die herkömmlichen Sicherheitsvorkehrungen für Tasten und Schalter mit hohem Hardwareaufwand verbunden und daher sehr kostenintensiv.

Aufgabe der vorliegenden Erfindung ist es daher, die Funktionssicherheit von herkömmlichen Sicherheitslösungen für Taster bzw. Schalter industrieller Steuerungen zu erhöhen und insbesondere auch die Schutzziele der EG-Maschinenrichtlinie zu erfüllen. Zusätzlich sollen auch 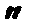 schlafende Fehler" von sicherheitsrelevanten Tastern bzw. Schaltern baldmöglichst nach deren Entstehung aufgedeckt werden. Die Ausführung soll in der Sicherheitskategorie der 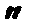 Einfehlersicherheit" erfolgen, so daß ein einzelner Fehler nicht zum Verlust der Sicherheitsfunktion von Tastern bzw. Schaltern führt.

Gemäß der Erfindung wird diese Aufgabe durch ein Verfahren mit den folgenden Verfahrensschritten gelöst:
1.1 die Information, ob ein Taster gedrückt bzw. ein Schalter geschaltet ist, wird aus mindestens zwei entkoppelten signalgebenden Elementen mehrkanalig gewonnen, welche als Schließer, Öffner oder als Schließer-Öffner-Kombinationen ausgeprägt sind,
1.2 die die Informationen beinhaltenden Signale werden mit einer kanalspezifischen Hardwaresignatur entsprechend des Status des jeweiligen signalgebenden Elementes versehen und die so gebildeten Daten werden über eine Schnittstelle kanalspezifisch zu der industriellen Steuerung übertragen,
1.3 auf Seiten der industriellen Steuerung werden die übertragenen Daten durch eine mehrkanalige Multiprozessor-Systemstruktur mindestens zweier unabhängiger Rechner, welche sich gegenseitig über einen kreuzweisen Daten- und Ergebnisvergleich überprüfen, ausgewertet, wobei die Kanäle der Rechner den Kanälen der Daten über die kanalspezifische Hardwaresignatur fest zugeordnet sind,
1.4 der durch Auswertung der Daten ermittelte Status jedes Tasters bzw. Schalters wird durch die Multiprozessor-Systemstruktur auf Plausibilität geprüft, indem der Status mit aktuellen Prozeßdaten der industriellen Steuerung verifiziert wird,
1.5 es wird die entsprechend des ermittelten Status vorgesehene Reaktion veranlaßt,
1.6 bei Fehlern, Dateninkonsistenz, einem Ausfall der Schnittstelle oder dergleichen wird die industrielle Steuerung und davon beeinflußte Peripherie zwangsweise in einen sicheren Zustand versetzt, wobei dieser sichere Zustand höchste Priorität besitzt und von jedem Rechner unabhängig aktivierbar ist.

In einer ersten vorteilhaften Ausgestaltung des Verfahrens gemäß der vorliegenden Erfindung wird erreicht, daß insbesondere funtionsauslösende Taster bzw. Schalter in sicherer Technik realisiert werden. Dies geschieht durch die folgenden weiteren Verfahrensschritte:
2.1 Taster bzw. Schalter werden mit mindestens einer Öffner-Schließer-Kombination ausgerüstet,
2.2 die Funktion wird erst ausgelöst, wenn auf beiden entkoppelten Signalen ein Flankenwechsel erfolgt.

In einer weiteren vorteilhaften Ausgestaltung des Verfahrens gemäß der vorliegenden Erfindung wird erreicht, daß insbesondere Taster bzw. Schalter mit Stopp-Funktion in sicherer Technik realisiert werden. Dies geschieht durch die folgenden alternativen Verfahrensschritte:
3.1 Taster bzw. Schalter werden ausschließlich mit Öffnern ausgerüstet,
3.2 die Funktion wird bereits ausgelöst, wenn lediglich auf einem entkoppelten Signal ein Flankenwechsel erfolgt, wobei überprüft wird, ob nach einer vorgebbaren Toleranzzeit die Flankenwechsel aller Öffner anstehen.

In einer weiteren vorteilhaften Ausgestaltung des Verfahrens gemäß der vorliegenden Erfindung wird erreicht, daß die Sicherheit solcher Taster bzw. Schalter mit Stopp-Funktion weiter verbessert wird, indem eine Fehleraufdeckung noch sicherer vorgenommen werden kann. Dies geschiet durch die folgenden weiteren Verfahrensschritte:
4.1 die durch die entkoppelten signalgebenden Elemente in Form von Öffnern gebildeten Ruhestromkreise werden in festen Zyklen zwangsdynamisiert, indem jeder Ruhestromkreis so kurzzeitig in Abhängigkeit von einem Überwachungstakt unterbrochen und die gesamte Systemreaktion überprüft wird, daß eine gleichzeitig anstehende Stopp-Anforderung sofort nach der Zwangsdynamisierung wirksam wird,
4.2 die Zwangsdynamisierung wird durch die Multiprozessor-Systemstruktur auf Fehler überwacht.

In einer weiteren vorteilhaften Ausgestaltung des Verfahrens gemäß der vorliegenden Erfindung wird erreicht, daß mehrere Bediengeräte gleichberechtigt vorhanden in sicherer Technik realisiert werden können. Dies erfolgt durch die folgenden weiteren Verfahrensschritte:
5.1 bei der Signalaufbereitung entsprechend Verfahrensschritt 1.2 werden die die Informationen beinhaltenden Signale entsprechend dem jeweiligen Bediengerät sicher adressiert,
5.2 die korrekte Adressierung wird durch die Multiprozessor-Systemstruktur auf Fehler überwacht

Um ein solches vorteilhaftes Verfahren zur Lösung der der Erfindung zugrunde liegenden Aufgabe auf einfache Art und Weise durchzufuhren, wird eine ebenso vorteilhafte Schaltungsanordnung mit den folgenden Merkmalen geschaffen:
6.1 Taster bzw. Schalter sind so ausgeprägt, daß sie mindestens zwei entkoppelte signalgebende Elemente aufweisen, welche als Schließer, Öffner oder als SchließerÖffner-Kombinationen ausgeprägt sind,
6.2 die Bedieneinheit weist Mittel auf, durch welche die Informationen beinhaltenden Signale mit einer kanalspezifischen Hardwaresignatur entsprechend des Status des jeweiligen signalgebenden Elementes versehbar sind,
6.3 es ist eine Schnittstelle zwischen dem oder den Bediengeräten und der industriellen Steuerung vorgesehen, über die die gebildeten Daten kanalspezifisch zu der industriellen Steuerung übertragbar sind,
6.4 auf Seiten der industriellen Steuerung ist eine mehrkanalige Multiprozessor-Systemstruktur mindestens zweier unabhängiger Rechner vorgesehen, welche sich gegenseitig über einen kreuzweisen Daten- und Ergebnisvergleich überprüfen, und durch welche die übertragenen Daten auswertbar sind, wobei die Kanäle der Rechner den Kanälen der Daten über die kanalspezifische Hardwaresignatur fest zuordbar sind,
6.5 der durch Auswertung der Daten ermittelte Status jedes Tasters bzw. Schalters ist durch die Multiprozessor-Systemstruktur auf Plausibilität prüfbar, indem der Status mit aktuellen Prozeßdaten der industriellen Steuerung verifiziert wird,
6.6 es sind Mittel vorgesehen, durch welche entsprechend des ermittelten Status eine vorgesehene Reaktion veranlaßbar ist,
6.7 es sind Mittel in der industriellen Steuerung vorgesehen, durch die bei Fehlern, Dateninkonsistenz, einem Ausfall der Schnittstelle oder dergleichen die Steuerungsperipherie zwangsweise in einen sicheren Zustand versetzbar ist, wobei dieser sichere Zustand höchste Priorität besitzt und von jedem Rechner unabhängig aktivierbar ist.

In einer ersten vorteilhaften Ausgestaltung der Schaltungsanordnung gemäß der vorliegenden Erfindung wird erreicht, daß insbesondere funtionsauslösende Taster bzw. Schalter in sicherer Technik realisiert werden. Dies geschieht durch die folgenden weiteren Merkmale:
7.1 Taster bzw. Schalter sind mit mindestens einer Öffner-Schließer-Kombination ausgerüstet,
7.2 es sind Mittel vorgesehen, welche die Funktion erst auslösen, wenn auf beiden entkoppelten Signalen ein Flankenwechsel erfolgt.

In einer weiteren vorteilhaften Ausgestaltung der Schaltungsanordnung gemäß der vorliegenden Erfindung wird erreicht, daß insbesondere Taster bzw. Schalter mit Stopp-Funktion in sicherer Technik realisiert werden. Dies geschieht durch die folgenden alternativen Merkmale:
8.1 Taster bzw. Schalter sind ausschließlich mit Öffnern ausgerüstet,
8.2 es sind Mittel vorgesehen, welche die Funktion bereits auslösen, wenn lediglich auf einem entkoppelten Signal ein Flankenwechsel erfolgt, wobei überprüft wird, ob nach einer vorgebbaren Toleranzzeit die Flankenwechsel aller Öffner anstehen.

In einer weiteren vorteilhaften Ausgestaltung der Schaltungsanordnung gemäß der vorliegenden Erfindung wird erreicht, daß die Flexibilität erhöht wird und Taster bzw. Schalter unterschiedlicher Konzeption eingesetzt werden können. Dies wird durch folgendes weiteres Merkmal ermöglicht:
9.1 die signalgebenden Elemente sind rein mechanisch oder rein sensorisch oder als eine Kombination aus beiden ausgestaltet.

In einer weiteren vorteilhaften Ausgestaltung der Schaltungsanordnung gemäß der vorliegenden Erfindung wird erreicht, daß die Flexibilität erhöht wird und Taster bzw. Schalter unterschiedlicher Bauart eingesetzt werden können. Dies wird durch folgendes weiteres Merkmal ermöglicht:
10.1 die signalgebenden Elemente sind rein kontaktbehaftet oder rein elektronisch oder als eine Kombination aus beiden ausgestaltet.

In einer weiteren vorteilhaften Ausgestaltung der Schaltungsanordnung gemäß der vorliegenden Erfindung wird erreicht, daß die Sicherheit solcher Taster bzw. Schalter mit Stopp-Funktion weiter verbessert wird, indem eine Fehleraufdeckung noch sicherer vorgenommen werden kann. Dies geschiet durch die folgenden weiteren Merkmale:
11.1 es sind Mittel zur Zwangsdynamisierung der durch die entkoppelten signalgebenden Elemente in Form von Öffnern gebildeten Ruhestromkreise in festen Zyklen vorgesehen, durch die jeder Ruhestromkreis so kurzzeitig in Abhängigkeit von einem Überwachungstakt unterbrechbar und die gesamte Systemreaktion überprüfbar ist, daß eine gleichzeitig anstehende Stopp-Anforderung sofort nach der Zwangsdynamisierung wirksam wird,
11.2 die Multiprozessor-Systemstruktur ist so ausgestaltet, daß die Mittel zur Zwangsdynamisierung damit auf Fehler überwachbar sind.

In einer weiteren vorteilhaften Ausgestaltung der Schaltungsanordnung gemäß der vorliegenden Erfindung wird erreicht, daß mehrere Bediengeräte gleichberechtigt vorhanden in sicherer Technik realisiert werden können. Dies erfolgt durch die folgenden weiteren Merkmale:
12.1 es sind Mittel zur sicheren Adressierung der die Informationen beinhaltenden Signale bei der Signalaufbereitung entsprechend dem jeweiligen Bediengerät vorgesehen,
12.2 die Multiprozessor-Systemstruktur ist so ausgestaltet, daß die Mittel zur korrekten Adressierung damit auf Fehler überwachbar sind.

In einer weiteren vorteilhaften Ausgestaltung der Schaltungsanordnung gemäß der vorliegenden Erfindung wird erreicht, daß die im vorangehenden genannten Vorteile nicht nur für Taster und Schalter, sondern darüber hinaus für alle Arten von Sensoren und zusätzlich auch Aktuatoren erzielt werden können. Dies wird durch folgende ergänzende Merkmale ermöglicht:
13.1 es ist eine dezentrale Peripherie zum Anschluß von Eingangssignalen und Ausgangssignalen vorgesehen, welche über die Schnittstelle mit der Multiprozessor-Systemstruktur verbunden ist,
13.2 auf Seiten der Multiprozessor-Systemstruktur sind Mittel vorgesehen, durch welche eine kanalspezifische Hardwaresignatur für sichere Ausgangssignale vornehmbar ist, und auf Seiten der dezentralen Peripherie sind Mittel vorgesehen, durch welche eine Auswertung der Hardwaresignatur der sicheren Ausgangsdaten vornehmbar ist,
13.3 es sind Mittel zur Zwangsdynamisierung von Eingangs- und Ausgangssignalen mit Ruhestromkreis vorgesehen, durch die jeder Ruhestromkreis in festen Zyklen so kurzzeitig in Abhängigkeit von einem Überwachungstakt unterbrechbar ist und die gesamte Systemreaktion überprüfbar ist, daß eine gleichzeitig anstehende Funktion sofort nach der Zwangsdynamisierung wirksam wird, wobei für mehrkanalige Anwendungen unabhängige Ruhestromkreise wechselseitig überprüfbar sind,
13.4 die Multiprozessor-Systemstruktur ist so ausgestaltet, daß die Mittel zur Zwangsdynamisierung damit auf Fehler überwachbar sind.

In einer weiteren vorteilhaften Ausgestaltung des Verfahrens gemäß der vorliegenden Erfindung wird erreicht, daß die im vorangehenden genannten Vorteile nicht nur für Taster und Schalter, sondern darüber hinaus für alle Arten von Sensoren und zusätzlich auch Aktuatoren erzielt werden können. Dies wird durch folgende ergänzende Verfahrensschritte ermöglicht:
14.1 neben Eingangssignalen werden auch Ausgangssignale einer dezentralen Peripherie über die Schnittstelle an die Multiprozessor-Systemstruktur geführt, wobei eine kanalspezifische Hardwaresignatur für sichere Ausgangssignale durch die Multiprozessor-Systemstruktur erfolgt und eine Auswertung der Hardwaresignatur der sicheren Ausgangsdaten auf Seiten der dezentralen Peripherie vorgenommen wird,
14.2 Eingangs- und Ausgangssignale mit Ruhestromkreis werden in festen Zyklen zwangsdynamisiert, indem jeder Ruhestromkreis so kurzzeitig in Abhängigkeit von einem Überwachungstakt unterbrochen und die gesamte Systemreaktion überprüft wird, daß eine gleichzeitig anstehende Funktion sofort nach der Zwangsdynamisierung wirksam wird, wobei für mehrkanalige Anwendungen unabhängige Ruhestromkreise wechselseitig überprüft werden,
14.3 die Zwangsdynamisierung wird durch die Multiprozessor-Systemstruktur auf Fehler überwacht.

Weitere erfinderische Einzelheiten und weitere Vorteile ergeben sich anhand der folgenden Schilderung von Ausführungsbeispielen und in Verbindung mit den Figuren. Dabei sind die Elemente der Darstellungen in den einzelnen Figuren, soweit sie übereinstimmen bzw. eine übereinstimmende Funktionalität besitzen, mit denselben Bezugszeichen gekennzeichnet. Es zeigen im einzelnen:
FIG 1 Blockschaltbild einer Schaltungsanordnung zum Anschluß von Tastern bzw. Schaltern in sicherer Technik gemäß der vorliegenden Erfindung unter Einbeziehung einer industriellen Steuerung,
FIG 2 Schaltbild einer exemplarischen Bedieneinheit mit in sicherer Technik angeschlossenen funktionsauslösenden Tastern und Tastern mit Stopp-Funktion,
FIG 3 Blockschaltbild einer Schaltungsanordnung zum Anschluß von beliebigen Sensoren und Aktuatoren in sicherer Technik gemäß der vorliegenden Erfindung unter Einbeziehung einer industriellen Steuerung und
FIG 4 direkter Anschluß von Not-Aus-Schaltern an eine Schaltungsanordnung gemäß FIG 3.

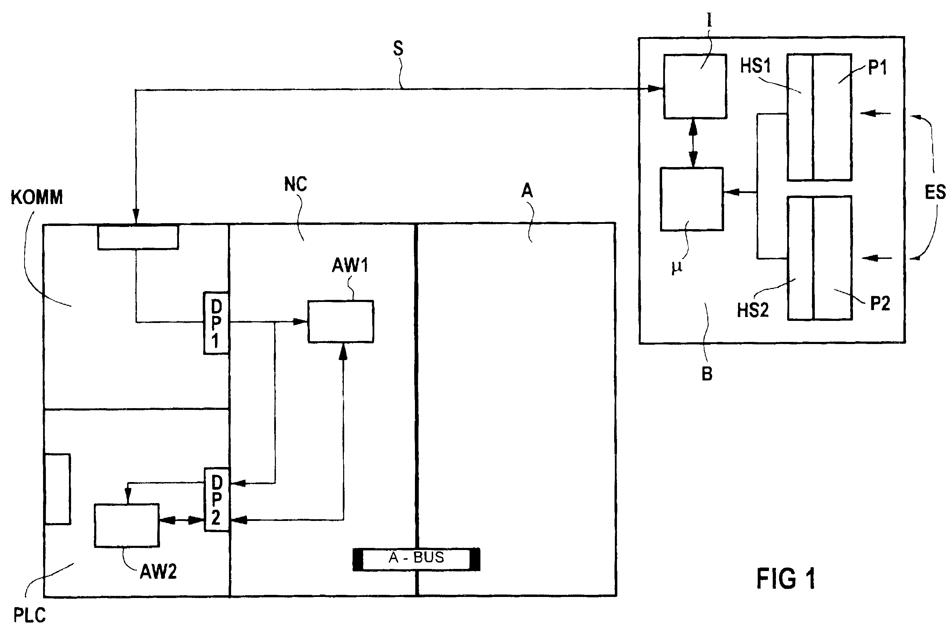

In der Darstellung gemäß FIG 1 ist ein Blockschaltbild einer Schaltungsanordnung zum Anschluß von Tastern bzw. Schaltern in sicherer Technik gemäß der vorliegenden Erfindung unter Einbeziehung einer industriellen Steuerung gezeigt. Einer Bedieneinheit B werden Eingangssignale ES zugeleitet, welche an zwei unabhängige Eingangs- bzw. Portbausteine P1 und P2 geschaltet sind. Jedem Portbaustein ist ein Mittel HS1 bzw. HS2 zum Versehen der Eingangssignale mit einer kanalspezifischen Hardwaresignatur nachgeschaltet. Die mit der erwähnten kanalspezifischen Hardwaresignatur versehene Daten werden einem Mikroprozessor µ zugeschaltet, über den die Daten über ein Interface I und eine Schnittstelle S zur industriellen Steuerung übertragen werden. Diese industrielle Steuerung besteht aus einem Kommunikationsteil KOMM, einem ersten Rechner NC für die numerische Steuerung und einem zweiten Rechner PLC. Über einen Antriebsbus A-BUS wird durch die industrielle Steuerung ein Antrieb A angesteuert.

Die Signale der sicherheitsrelevanten Tipptasten und Schalter werden somit über Eingangsbausteine auf der Senderseite am Bediengerät B in sicherer Technik eingekoppelt und vor der Datenübertragung zur Sicherung mit einer spezifischen Signatur versehen. Auf der Empfängerseite, also der industriellen Stuerung, werten mindestens zwei Rechner, im Ausführungsbeispiel sind dies NC und PLC, die übertragenen Daten aus und prüfen diese auf Plausibilität. Die Rechner prüfen sich gegenseitig über einen kreuzweisen Daten- und Ergebnisvergleich. Dazu besitzt jeder Rechner eine Auswerteeinheit AW1 bzw. AW2. Von der Kommunikationseinheit KOMM gelangen die übertragenen Daten über ein Dual-Port-Ram DP1 zur Auswerteeinheit AW1 des ersten Rechners NC und über ein weiteres Dual-Port-Ram DP2 zur Auswerteeinheit AW2 des zweiten Rechners PLC. Die beiden Auswerteeinheiten AW1 und AW2 stehen über das Dual-Port-Ram DP2 ebenfalls über eine Kommunikationsleitung miteinander in Verbindung. Über diese erfolgt auch der gegenseitige kreuzweise Daten- und Ergebnisvergleich.

Bei Fehlern, Dateninkonsistenz oder Ausfall der Schnittstelle S werden die Mittel zur Realisierung der sicheren Tipptasten- und Schalterfunktionen zwangsweise in einen sicheren Zustand überführt. Beispiel für einen solchen sicheren Zustand sind ein ausgelöses Not-Aus, als 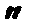 betätigt" gesetzte Stopp-Tasten oder als 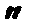 losgelassen" gesetzte Verfahrtasten. Ein aktuell gültiger Greiferstatus eines Roboters beispielsweise (offen oder geschlossen) bleibt erhalten. Die angeschlossenen Antriebe A werden bestmöglich stillgesetzt und gehen in einen sicheren Betriebshalt über.

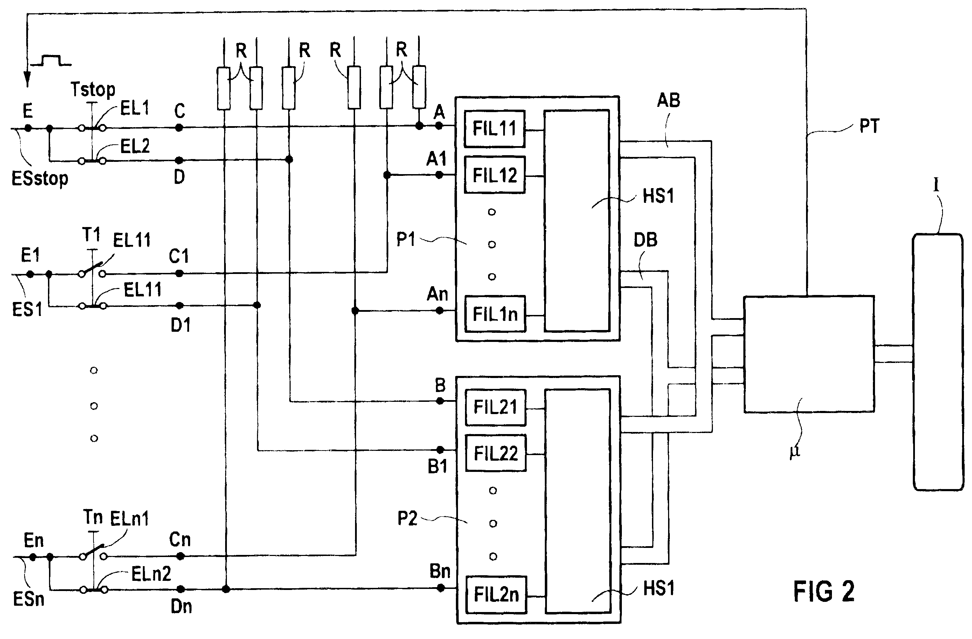

In der Darstellung gemäß FIG 2 ist ein Schaltbild einer exemplarischen Bedieneinheit mit in sicherer Technik angeschlossenen funktionsauslösenden Tastern T1 bis Tn sowie Tastern mit Stopp-Funktion Tstop gezeigt. Die Information, ob eine Taste gedrückt oder ein Schalter geschaltet wird, wird jeweils aus mindestens zwei entkoppelten signalgebenden Elementen EL1, EL2, EL11, EL12 ... Eln1, Eln2 gewonnen. Diese signalgebenden Elemente können als Schließer, als Öffner oder als eine Öffner-Schließer-Kombination ausgeprägt sein. Funktionsauslösende Taster T1 bis Tn bzw. Schalter werden vorzugsweise mit einer Öffner-Schließer-Kombination ausgerüstet. Dies ist bei den beiden in der Darstellung gemäß FIG 2 gezeigten funktionsauslösenden Tastern T1 und Tn der Fall. Die Funktion wird erst dann ausgelöst, wenn auf beiden Signalen ein Flankenwechsel erfolgt.

Taster bzw. Schalter mit Stopp-Funktionen wie Tstop werden vorzugsweise mit zwei Öffnern ausgerüstet. Dies ist in der Darstellung gemäß FIG 2 anhand des Tasters Tstop und den beiden signalgebenden Elementen EL1, EL2 gezeigt. Die Funktion wird bereits dann ausgelöst, wenn nur bei einem der beiden Öffner ein Flankenwechsel erfolgt. Es wird jedoch zur Fehleraufdeckung immer überprüft, ob die Flankenwechsel beider Öffner nach einer Totzeit anstehen. Die signalgebenden Elemente können rein mechanisch, rein sensorisch oder eine Kombination aus beiden sein. Außerdem können die signalgebenden Elemente sowohl rein kontaktbehaftet, rein elektronisch oder wiederum eine Kombination aus beiden sein. Bei rein mechanischer Ausführung der Tasten oder Schalter wird ein Verklemmen sicher verhindert. Im Ausführungsbeispiel gemäß der FIG 2 sind die durch die entkoppelten signalgebenden Elemente EL1, EL2 ... Eln1, Eln2 gewonnenen Signale jeweils mit C und D bezeichnet. Die funktionsauslösenden Taster T1 bis Tn und die durch deren signalgebende Elemente erzeugten Signale sind entsprechend mit C1, D1 bzw. Cn, Dn bezeichnet. Im in FIG 2 dargestellten Ausführungsbeispiel werden diese Signale über Pull-up-Widerstände R über getrennte Eingangsbausteine P1 und P2 redundant angeschlossen. Dazu wird das jeweilige C-Signal eines ersten signalgebenden Elementes über entsprechende Eingänge A, A1...An zum ersten Eingangsbaustein P1, das entsprechend andere D-Signal des zweiten signalgebenden Elementes über Eingänge B, B1...Bn zum zweiten Eingangsbaustein P2 geführt.

Auf diese Weise entstehen zwei unabhängige Kanäle AB und DB, in denen der aktuelle Tasten- bzw. Schalterstatus vorhanden ist. Bevor der Mikroprozessor µ auf die Daten zugreifen kann, wird in jedem Eingangsbaustein P1 bzw. P2 eine kanalspezifische Hardwaresignatur über den aktuellen Status gelegt. Dies wird durch den Eingängen A bis An bzw. B bis Bn der beiden Eingangsbausteine P1 und P2 zugeordnete Filtereinheiten FIL11 bis FIL1n bzw. FIL21 bis FIL2n und darauffolgende Mittel HS1 bzw. HS2 zum Generieren der kanalspezifischen Hardwaresignatur erreicht. Die Daten sind somit gesichert und können in einem Datenpaket oder in zwei Datenpaketen kanalspezifisch übertragen werden. Dazu werden die Ausgangsdaten AB und DB einem Mikroprozessor µ zugeleitet, welcher diese über ein Interface I über die in der Darstellung gemäß FIG 1 gezeigte Schnittstelle zur industriellen Steuerung beträgt.

Bei Tastern bzw. Schaltern mit Stopp-Funktionen, beispielsweise Tstop, werden die mit Hilfe der zwei Öffner gebildeten Ruhestromkreise in festen Zyklen zwangsdynamisiert, um Kurzschlüsse auf den Verbindungsleitungen aufzudecken. Diese zyklische Zwangsdynamisierung erfolgt, indem ein solcher Ruhestromkreis kurzzeitig in Abhängigkeit von einem Überwachungstakt bzw. Prüftakt PT, welcher durch den Mikroprozessor µ generiert wird, unterbrochen wird und die gesamte Systemreaktion überprüft wird, ohne daß es hierbei zum Auslösen der Funktion kommt. Dazu wird der Prüftakt PT eingangsseitig auf die signalgebenden Elemente EL1, EL2 ... Eln1, Eln2 über entsprechend vorgesehene Eingänge E, E1...En aufgeschaltet. An diese Eingänge sind auch die Eingangssignale ESstop, ES1...ESn geführt. Durch die nur sehr kurze Unterbrechung wird eine gleichzeitig anstehende Stopp-Anforderung sofort nach der Zwangsdynamisierung wirksam.

Sind mehrere Bediengerate B gleichberechtigt vorgesehen, so wird bei der Signalaufbereitung eine Adressierung in sicherer Technik vorgenommen.

Da eine hochwertige Datensicherung über eine Hardwaresignatur schon in den Eingangsbausteinen P1 bzw. P2 vorgenommen wird, ist die eigentliche Datenübertragung nicht mehr sicherheitsrelevant. Es ist zu jedem Zeitpunkt eine Fehleraufdeckung gewährleistet. Die Datenaufbereitung sowie die Datenübertragung über die Schnittstellenbausteine I, S, KOMM können in Hardware und Software ausgeprägt sein und den handelsüblichen Feldbussen entsprechen. Bei leitungsgebundenen Punkt-zu-Punkt-Verbindungen (z.B. Kupfer- oder Glasfaserkabel) mit einem Endgerät (z.B. Programmierhandgerät) ist eine Adressierung über die Hardware eindeutig gegeben. Liegen mehrere Bediengeräte gleichberechtigt an einem Bus, so wird eine sichere Adressierung über die Software vorgenommen. Ebenfalls kann eine sichere Datenübertragung auch drahtlos über eine Funkverbindung erfolgen. Das Bediengerät B wird hierbei über einen Akku mit Energie versorgt.

Die Daten werden von mindestens zwei unabhängigen Rechnern empfangen und in sicherer Technik weiter verarbeitet. Dazu bilden auf Empfängerseite, also auf Seite der industriellen Steuerung, mindestens zwei Rechner NC und PLC eine Multiprozessor-Systemstruktur. Im Ausführungsbeispiel in der Darstellung gemäß FIG 1 ist somit eine zweikanalige Systemstruktur gezeigt, mit der die Daten geprüft und die Schnittstelle S auf ihrer Funktionstüchtigkeit überwacht wird. Jeder der beiden Rechner NC und PLC hat als Empfänger je einen spezifischen Schlüssel bzw. eine Signatur, welche nur für die ihm zugewiesenen Daten paßt. Damit sind die Kanäle auf der Sendeseite, also auf Seiten des Bediengerätes B, den Kanälen auf der Empfängerseite, also auf Seiten der industriellen Steuerung, fest zugeordnet.

In einer möglichen Realisierung besteht die Erwartungshaltung, daß die Daten in einem festen zyklischen Zeitrahmen empfangen werden. Darüber hinaus besteht eine Erwartungshaltung, daß die Daten im dynamischen Wechsel mit den Signaturen 1 und 2 (entsprechend einem Kanal 1 und einem Kanal 2) in definierter Reihenfolge vorliegen. Beim Systemhochlauf wird davon ausgegangen, daß keine der Tipptasten gedrückt ist. Andernfalls wird ein Tastenfehler erkannt.

Die beiden Rechner NC und PLC überprüfen sich gegenseitig über einen kreuzweisen Daten- und Ergebnisvergleich. Darüber hinaus werden die Daten auf Plausibilität überprüft. Dabei wird der Taster- bzw. Schalter-Status mit aktuellen Prozeßdaten der industriellen Steuerung verifiziert und bei plausiblen Ergebnissen eine Fehlermeldung generiert. Darüber hinaus kann eine Lebenszeichenüberwachung des Mikroprozessors µ im Bediengerät B durch die Multiprozessor-Systemstruktur der industriellen Steuerung vorgenommen werden. Bei Einsatz mehrerer gleichberechtigter Bediengeräte B erfolgt auf Seiten der industriellen Steuerung eine Überprüfung der korrekten Adressierung zwischen Sender- und Empfängerseite. Auch die Zwangsdynamisierung bei Tastern und Schaltern mit Stopp-Funktion wird durch die beiden Rechner NC und PLC ausgewertet. Werden Antriebsbewegungen unterbrochen, so werden alle an der Bewegung beteiligten Antriebe A stillgesetzt und automatisch in einen sicheren Betriebshalt überführt. Ein solcher Fall tritt ein, wenn beispielsweise Verfahrtasten oder Start-Tasten im Einrichtbetrieb oder Testbetrieb nach einer Betätigung losgelassen werden. Beim Betätigen einer Stopp-Taste ist dies zu jedem Zeitpunkt der Fall.

Bei Fehlern, Dateninkonsistenz oder Totalausfall der Schnittstelle wird das System zwangsweise in einen sicheren Zustand überführt. Dabei wird ein sicherer Status, welcher fest hinterlegt ist, unabhängig vom Bediengerät aktiviert. Dieser sichere Satus hat höchste Priorität und kann von jedem der beiden Rechner NC und PLC unabhängig aktiviert werden.

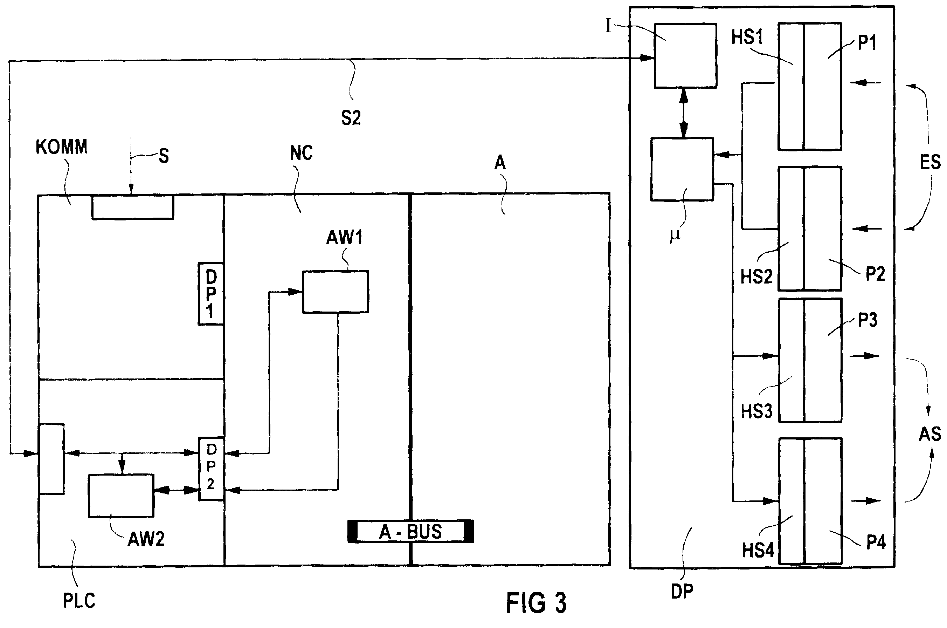

In der Darstellung gmäß FIG 3 ist ein Blockschaltbild einer Schaltungsanordnung zum Anschluß von beliebigen Sensoren und Aktuatoren in sicherer Technik gemäß der vorliegenden Erfindung unter Einbeziehung einer industriellen Steuerung gezeigt. Dabei stimmt die Darstellung gemäß FIG 3 im wesentlichen mit den Elementen der Darstellung von FIG 1 überein. Daher sollen im folgenden nur die Unterschiede herausgestellt werden. Anstelle einer Bedieneinheit B ist eine dezentrale Peripherie-Baugruppe DP vorgesehen, an welche Eingangssignale ES gefuhrt und an der Ausgangssignale AS anstehen. Die Eingangssignale werden, wie bereits anläßlich der Darstellung gemäß FIG 1 geschildert, über zwei Eingangs- bzw. Portbausteine P1 und P2 in der geschilderten Art und Weise weiterverarbeitet. Gleichzeitig werden über den Mikroprozessor µ jedoch auch Ausgangssignale zugeordnet, wobei solche Signale ebenfalls an zwei weitere Eingangs- bzw. Portbausteine P3 und P4 gefuhrt sind. Diesen beiden Portbausteinen P3 und P4 sind ebenfalls Mittel HS3 und HS4 zum Versehen der Daten mit einer Hardwaresignatur vorgeschaltet. Die Ausgangssignale der Portbausteine P3 und P4 stehen als Ausgangssignale AS an.

Zur Datenübertragung zwischen der dezentralen Peripherie-Baugruppe DP und der industriellen Steuerung ist eine weitere Schnittstelle S2 gezeigt, welche ebenfalls an das Interface I der dezentralen Peripherie-Baugruppe DP angeschaltet ist. Auf Empfängerseite, also auf Seiten der industriellen Steuerung, wird die Schnittstelle S2 direkt an den Rechner PLC geführt. Die Signale der Schnittstelle S2 werden dann zum einen an die Auswerteeinheit AW2 des Rechners PLC und über das Dual-Port-Ram DP2 zur Auswerteeinheit AW1 des anderen Rechners NC geführt.

Das technische Grundprinzip gemäß der vorliegenden Erfindung kann somit auch für die Versorgung einer dezentralen Peripherie in sicherer Technik beispielsweise über eine Feldbus genutzt werden. Zusätzlich zu den Eingangssignalen ES sind somit auch sichere Ausgangssignale AS möglich. Werden die sicheren Ein- und Ausgangssignale über eine Feldbus an die beiden Rechner NC und PLC herangeführt, so kann ein Großteil der zentralen Eingabe- und Ausgabebaugruppen an der industriellen Steuerung eingespart werden. Die Grundplattform der Auswertung ist so angelegt, daß es gleichgültig ist, ob die Eingangs- und Ausgangssignale über Hardware oder über einen Feldbus an die Eingangs- und Ausgangsbaugruppen geführt werden.

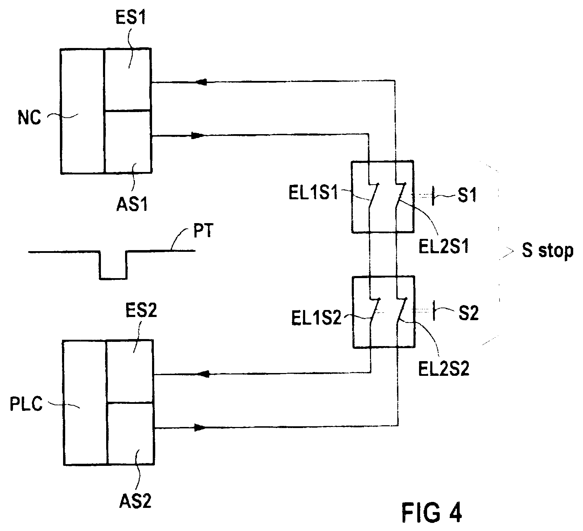

Auf diese Weise wird auch der direkte Anschluß beispielsweise von Not-Aus-Schaltern ermöglicht. Eine solche Anschaltung ist in der Darstellung gemäß FIG 4 gezeigt. Die Ausführung ist sowohl mit einer als auch mit zwei Kontaktebenen bzw. Kanälen möglich. Darüber hinaus lassen sich auch mehr als zwei signalgebende Elemente und damit verbunden höhere Kontaktebenen mit zusätzlicher Sicherheit realisieren. Die Darstellung gemäß FIG 4 zeigt eine Möglichkeit eines direkten Anschlusses von Not-Aus-Schaltern an eine Schaltungsanordnung gemäß der Darstellung nach FIG 3. Es sind schematisch die beiden Rechner NC und PLC gezeigt, welche in der bereits geschilderten Weise jeweils über eine oder mehrere dezentrale Peripherie-Baugruppen Eingangssignale und Ausgangssignale verarbeiten. Fur den Rechner NC sind dies Eingangssignale ES1 und Ausgangssignale AS1, für den anderen Rechner PLC sind dies Eingangssignale ES2 und Ausgangssignale AS2.

Dabei werden die entsprechenden Ausgangssignale des einen Rechners über zwei in Reihe geschaltete Schalter S1 und S2 an den Eingang der entsprechend anderen dezentralen Peripherie-Baugruppe geführt. Da ebenfalls Schalter S1 und S2 mit zwei Kontaktebenen, d.h. zwei signalgebenden Elementen verwendet werden, werden so die Ausgangssignale AS1 zum Eingang ES2 und die Ausgangssignale AS2 zum Eingang ES1 geführt. Da es sich um einen Not-Aus-Schalter Sstop handelt, ist dieser aus zwei Schaltern S1 und S2 gebildet, welche jeweils mit zwei mit Öffnern ausgerüsteten signalgebenden Elementen EL1S1 und EL2S1 bzw. EL1S2 und EL2S2 ausgerüstet sind. Das Auslösen eines der Schalter S1 oder S2 unterbricht im Idealfall beide Ruhestromkreise, welche von AS1 zu ES2 zum einen und von AS2 zu ES1 zum anderen verlaufen. Jedoch auch dann, wenn ein signalgebendes Element defekt sein sollte, wird einer der Ruhestromkreise sicher unterbrochen und ein entsprechender Not-Aus verarbeitet.

Sensoren oder Aktoren, welche über Ein- bzw. Ausgangssignale mit Ruhestromkreisen arbeiten, werden ebenfalls zyklisch einer Zwangsdynamisierung unterzogen. Dieser Sachverhalt ist symbolisch in der Darstellung gemäß FIG 4 durch den Prüftakt PT dargestellt. Hierbei wird der Ruhestromkreis kurzzeitig in Abhängigkeit des Prüf- bzw. Überwachungstaktes PT unterbrochen und die gesamte Systemreaktion überprüft, ohne daß es jeweils zum Auslösen der Funktion kommt. Durch die nur sehr kurze Unterbrechung wird eine gleichzeitig anstehende Signaländerung sofort nach der Zwangsdynamisierung wirksam.

Sind die Sensoren oder Aktoren mit zwei unabhängigen Ruhestromkreisen ausgerüstet, so wie dies in der Darstellung gemäß FIG 4 der Fall ist, dann werden diese wechselseitig geprüft. Dies könnten beispielsweise externe Not-Aus-Schalter mit zwei Öffnerkontaktebenen sein, wie sie der Darstellung gemäß FIG 4 zugrundeliegen. Jede dieser beiden Kontaktebenen bildet paarweise mit den Eingangs- bzw. Ausgangssignalen der beiden Rechner NC und PLC eine zweikanalige Struktur. Einer der beiden Kanäle ist auch während der kurzen Zwangsdynamisierung immer aktiv, so daß eine gleichzeitig anstehende Signaländerung immer wirksam bleibt.

Bei Sensoren, wie beispielsweise Lichtschranken, die getaktete Signale anbieten, kann die Zwangsdynamisierung entfallen. Die beiden Rechner NC und PLC werten die getakteten Signale aus. Im Fehlerfall wird dann eine projektierbare Reaktion angestoßen.

Die in den Ausführungsbeispielen gemäß den Figuren 1 bis 4 gezeigten zweikanaligen Strukturen mit Tastern bzw. Schaltern mit jeweils zwei entkoppelten signalgebenden Elementen lassen sich darüber hinaus auch mit mehr als zwei signalgebenden entkoppelten Elementen und somit einer mehr als zweikanaligen Struktur realisieren. Dadurch wird zusätzliche Sicherheit erzeugt, wodurch nicht lediglich einer Einfehlersicherheit, sondern entsprechend der Anzahl der Kanäle eine Mehrfehlersicherheit erreicht werden kann.

Durch die sichere Tipptasten- und Schalterfunktion kann der Zustimmtaster in seiner heutigen Bedeutung in vollem Umfang und in jeder Betriebsart ersetzt werden. Mit dieser Technologie gemäß der vorliegenden Erfindung wird die Zustimmung integraler Bestandteil der Gesamtfunktion. Damit ist eine Energietrennung zwischen Umrichter und Motor nicht mehr erforderlich, die Antriebe können in jeder Betriebsart nach einem Stopp in einen sicheren Betriebshalt überfuhrt werden. Die oft geforderte Einhandbedienung ist damit erstmals möglich und auch die Bedienerfreundlichkeit wird weiter verbessert.

Der Not-Aus kann auch zukünftig nicht entfallen und anderweitig ersetzt werden. Durch eine hohe Zuverlässigkeit und Fehleraufdeckung läßt sich seine Wirksamkeit gegenüber heutigen reinen Hardwarelösungen jedoch erheblich steigern. Die Signale von Not-Aus-Schaltern können vor Ort, beispielsweise am Bediengerät, über einen Datenbus oder direkt über sicherheitsgerichtete Eingangssignale in eine sichere Auswerteelektronik eingekoppelt werden. Durch die Integration kann der Not-Aus nun direkt und intelligent auf die Steuerung einwirken. Eine externe Not-Aus-Logik in Hardware ist nicht mehr erforderlich. Das Not-Aus-Signal kann über eine serielle Schnittstelle sicher übertragen werden.

## Patentansprüche

1. Verfahren zur Realisierung von sicheren Tipptastenfunktionen bzw. Schalterfunktionen mit Fehleraufdeckung an Bediengeräten industrieller Steuerungen, mit folgenden Verfahrensschritten:
1.1 die Information, ob ein Taster (Tstop,T1...Tn) gedrückt bzw. ein Schalter (Sstop,S1,S2) geschaltet ist, wird aus mindestens zwei entkoppelten signalgebenden Elementen (EL1,EL2...ELn1,Eln2) mehrkanalig gewonnen, welche als Schließer, Öffner oder als Schließer-Öffner-Kombinationen ausgeprägt sind,
1.2 die die Informationen beinhaltenden Signale (C,D...Cn,Dn) werden mit einer kanalspezifischen Hardwaresignatur (HS1,HS2) entsprechend des Status des jeweiligen signalgebenden Elementes (EL1,EL2...ELn1,Eln2) versehen und die so gebildeten Daten werden über eine Schnittstelle (I,S, KOMM) kanalspezifisch zu der industriellen Steuerung übertragen,
1.3 auf Seiten der industriellen Steuerung werden die übertragenen Daten durch eine mehrkanalige Multiprozessor-Systemstruktur mindestens zweier unabhängiger Rechner (NC,PLC), welche sich gegenseitig über einen kreuzweisen Daten- und Ergebnisvergleich (AW1,AW2) überprüfen, ausgewertet, wobei die Kanäle der Rechner den Kanälen der Daten über die kanalspezifische Hardwaresignatur (HS1, HS2) fest zugeordnet sind,
1.4 der durch Auswertung der Daten ermittelte Status jedes Tasters (Tstop,T1...Tn) bzw. Schalters (Sstop,S1,S2) wird durch die Multiprozessor-Systemstruktur auf Plausibilität geprüft, indem der Status mit aktuellen Prozeßdaten der industriellen Steuerung verifiziert wird,
1.5 es wird die entsprechend des ermittelten Status vorgesehene Reaktion veranlaßt,
1.6 bei Fehlern, Dateninkonsistenz, einem Ausfall der Schnittstelle (I,S,KOMM) oder dergleichen wird die industrielle Steuerung und davon beeinflußte Peripherie zwangsweise in einen sicheren Zustand versetzt, wobei dieser sichere Zustand höchste Priorität besitzt und von jedem Rechner (NC,PLC) unabhängig aktivierbar ist.

2. Verfahren nach Anspruch 1 zur Realisierung funktionsauslösender Taster bzw. Schalter, mit folgenden weiteren Verfahrensschritten:
2.1 Taster (T1...Tn) bzw. Schalter (S1,S2) werden mit mindestens einer Öffner-Schließer-Kombination ausgerüstet,
2.2 die Funktion wird erst ausgelöst, wenn auf beiden entkoppelten Signalen (C1,D1...Cn,Dn) ein Flankenwechsel erfolgt.

3. Verfahren nach Anspruch 1 zur Realisierung von Tastern bzw. Schaltern mit Stopp-Funktion, mit folgenden weiteren Verfahrensschritten:
3.1 Taster (Tstop) bzw. Schalter (Sstop) werden ausschließlich mit Öffnern ausgerüstet,
3.2 die Funktion wird bereits ausgelöst, wenn lediglich auf einem entkoppelten Signal (C,D) ein Flankenwechsel erfolgt, wobei überprüft wird, ob nach einer vorgebbaren Toleranzzeit die Flankenwechsel aller Öffner anstehen.

4. Verfahren nach Anspruch 3, mit folgenden weiteren Verfahrensschritten:
4.1 die durch die entkoppelten signalgebenden Elemente (EL1, EL2) in Form von Öffnern gebildeten Ruhestromkreise werden in festen Zyklen zwangsdynamisiert, indem jeder Ruhestromkreis so kurzzeitig in Abhängigkeit von einem Überwachungstakt (PT) unterbrochen und die gesamte Systemreaktion überprüft wird, daß eine gleichzeitig anstehende Stopp-Anforderung sofort nach der Zwangsdynamisierung wirksam wird,
4.2 die Zwangsdynamisierung wird durch die Multiprozessor-Systemstruktur auf Fehler überwacht.

5. Verfahren nach einem der vorangehenden Ansprüche, wobei mehrere Bediengeräte gleichberechtigt vorhanden sind, mit folgenden weiteren Verfahrensschritten:
5.1 bei der Signalaufbereitung entsprechend Verfahrensschritt 1.2 werden die die Informationen beinhaltenden Signale entsprechend dem jeweiligen Bediengerät (B) sicher adressiert,
5.2 die korrekte Adressierung wird durch die Multiprozessor-Systemstruktur auf Fehler überwacht

6. Schaltungsanordnung mit sicheren Tipptastenfunktionen bzw. Schalterfunktionen mit Fehleraufdeckung an Bediengeräten industrieller Steuerungen, mit folgenden Merkmalen:
6.1 Taster (Tstop,T1...Tn) bzw. Schalter (Sstop,S1,S2) sind so ausgeprägt, daß sie mindestens zwei entkoppelte signalgebende Elemente (EL1,EL2...ELn1,ELn2) aufweisen, welche als Schließer, Öffner oder als Schließer-Öffner-Kombinationen ausgeprägt sind,
6.2 die Bedieneinheit (B) weist Mittel (HS1,HS2) auf, durch welche die Informationen beinhaltenden Signale (C,D...Cn, Dn) mit einer kanalspezifischen Hardwaresignatur entsprechend des Status des jeweiligen signalgebenden Elementes (EL1,EL2...ELn1,ELn2) versehbar sind,
6.3 es ist eine Schnittstelle (I,S,KOMM) zwischen dem oder den Bediengeräten (B) und der industriellen Steuerung (NC,PLC,KOMM) vorgesehen, über die die gebildeten Daten kanalspezifisch zu der industriellen Steuerung übertragbar sind,
6.4 auf Seiten der industriellen Steuerung ist eine mehrkanalige Multiprozessor-Systemstruktur mindestens zweier unabhängiger Rechner (NC,PLC) vorgesehen, welche sich gegenseitig über einen kreuzweisen Daten- und Ergebnisvergleich (AW1,AW2) überprüfen, und durch welche die übertragenen Daten auswertbar sind, wobei die Kanäle der Rechner den Kanälen der Daten über die kanalspezifische Hardwaresignatur (HS1,HS2) fest zuordbar sind,
6.5 der durch Auswertung der Daten ermittelte Status jedes Tasters (Tstop,T1...Tn) bzw. Schalters (Sstop,S1,S2) ist durch die Multiprozessor-Systemstruktur auf Plausibilität prüfbar, indem der Status mit aktuellen Prozeßdaten der industriellen Steuerung verifiziert wird,
6.6 es sind Mittel vorgesehen, durch welche entsprechend des ermittelten Status eine vorgesehene Reaktion veranlaßbar ist,
6.7 es sind Mittel in der industriellen Steuerung vorgesehen, durch die bei Fehlern, Dateninkonsistenz, einem Ausfall der Schnittstelle oder dergleichen die Steuerungsperipherie zwangsweise in einen sicheren Zustand versetzbar ist, wobei dieser sichere Zustand höchste Priorität besitzt und von jedem Rechner (NC,PLC) unabhängig aktivierbar ist.

7. Schaltungsanordnung nach Anspruch 6 zur Realisierung funktionsauslösender Taster bzw. Schalter, mit folgenden weiteren Merkmalen:
7.1 Taster (T1...Tn) bzw. Schalter (S1,S2) sind mit mindestens einer Öffner-Schließer-Kombination ausgerüstet,
7.2 es sind Mittel vorgesehen, welche die Funktion erst auslösen, wenn auf beiden entkoppelten Signalen (C,D) ein Flankenwechsel erfolgt.

8. Schaltungsanordnung nach Anspruch 6 zur Realisierung von Tastern bzw. Schaltern mit Stopp-Funktion, mit folgenden weiteren Merkmalen:
8.1 Taster (Tstop) bzw. Schalter (Sstop) sind ausschließlich mit Öffnern ausgerüstet,
8.2 es sind Mittel vorgesehen, welche die Funktion bereits auslösen, wenn lediglich auf einem entkoppelten Signal (C1,D1...Cn,Dn) ein Flankenwechsel erfolgt, wobei überprüft wird, ob nach einer vorgebbaren Toleranzzeit die Flankenwechsel aller Öffner anstehen.

9. Schaltungsanordnung nach einem der Ansprüche 6 bis 8, mit folgendem weiteren Merkmal:
9.1 die signalgebenden Elemente (EL1,EL2...ELn1,ELn2) sind rein mechanisch oder rein sensorisch oder als eine Kombination aus beiden ausgestaltet.

10. Schaltungsanordnung nach einem der Ansprüche 6 bis 9, mit folgendem weiteren Merkmal:
10.1 die signalgebenden Elemente (EL1,EL2...ELn1,ELn2) sind rein kontaktbehaftet oder rein elektronisch oder als eine Kombination aus beiden ausgestaltet.

11. Schaltungsanordnung nach einem der Ansprüche 8 bis 10, mit folgenden weiteren Merkmalen:
11.1 es sind Mittel (µ) zur Zwangsdynamisierung der durch die entkoppelten signalgebenden Elemente in Form von Öffnern gebildeten Ruhestromkreise in festen Zyklen vorgesehen, durch die jeder Ruhestromkreis so kurzzeitig in Abhängigkeit von einem Überwachungstakt (PT) unterbrechbar und die gesamte Systemreaktion überprüfbar ist, daß eine gleichzeitig anstehende Stopp-Anforderung sofort nach der Zwangsdynamisierung wirksam wird,
11.2 die Multiprozessor-Systemstruktur (NC,PLC) ist so ausgestaltet, daß die Mittel (µ) zur Zwangsdynamisierung damit auf Fehler überwachbar sind.

12. Schaltungsanordnung nach einem der Ansprüche 6 bis 11, wobei mehrere Bediengeräte gleichberechtigt vorhanden sind, mit folgenden weiteren Merkmalen:
12.1 es sind Mittel (µ) zur sicheren Adressierung der die Informationen beinhaltenden Signale bei der Signalaufbereitung entsprechend dem jeweiligen Bediengerät (B) vorgesehen,
12.2 die Multiprozessor-Systemstruktur (NC,PLC) ist so ausgestaltet, daß die Mittel (µ) zur korrekten Adressierung damit auf Fehler überwachbar sind.

13. Schaltungsanordnung nach einem der Ansprüche 6 bis 12, zur Anwendung für Sensoren und Aktuatoren, mit folgenden weiteren Merkmalen:
13.1 es ist eine dezentrale Peripherie (DP) zum Anschluß von Eingangssignalen (ES) und Ausgangssignalen (AS) vorgesehen, welche über die Schnittstelle (I,S,KOMM) mit der Multiprozessor-Systemstruktur verbunden ist,
13.2 auf Seiten der Multiprozessor-Systemstruktur sind Mittel vorgesehen, durch welche eine kanalspezifische Hardwaresignatur für sichere Ausgangssignale vornehmbar ist, und auf Seiten der dezentralen Peripherie (DP) sind Mittel (µ) vorgesehen, durch welche eine Auswertung der Hardwaresignatur der sicheren Ausgangsdaten vornehmbar ist,
13.3 es sind Mittel (µ) zur Zwangsdynamisierung von Eingangs-(ES) und Ausgangssignalen (AS) mit Ruhestromkreis vorgesehen, durch die jeder Ruhestromkreis in festen Zyklen so kurzzeitig in Abhängigkeit von einem Überwachungstakt (PT) unterbrechbar ist und die gesamte Systemreaktion überprüfbar ist, daß eine gleichzeitig anstehende Funktion sofort nach der Zwangsdynamisierung wirksam wird, wobei für mehrkanalige Anwendungen unabhängige Ruhestromkreise wechselseitig überprüfbar sind,
13.4 die Multiprozessor-Systemstruktur ist so ausgestaltet, daß die Mittel (µ) zur Zwangsdynamisierung damit auf Fehler überwachbar sind.

14. Verfahren nach einem der Ansprüche 1 bis 5, zur Anwendung für Sensoren und Aktuatoren, mit folgenden weiteren Verfahrensschritten:
14.1 neben Eingangssignalen (ES) werden auch Ausgangssignale (AS) einer dezentralen Peripherie (DP) über die Schnittstelle (I,S,KOMM) an die Multiprozessor-Systemstruktur geführt, wobei eine kanalspezifische Hardwaresignatur für sichere Ausgangssignale durch die Multiprozessor-Systemstruktur erfolgt und eine Auswertung der Hardwaresignatur der sicheren Ausgangsdaten auf Seiten der dezentralen Peripherie vorgenommen wird,
14.2 Eingangs- (ES) und Ausgangssignale (AS) mit Ruhestromkreis werden in festen Zyklen zwangsdynamisiert, indem jeder Ruhestromkreis so kurzzeitig in Abhängigkeit von einem Überwachungstakt unterbrochen und die gesamte Systemreaktion überprüft wird, daß eine gleichzeitig anstehende Funktion sofort nach der Zwangsdynamisierung wirksam wird, wobei für mehrkanalige Anwendungen unabhängige Ruhestromkreise wechselseitig überprüft werden,
14.3 die Zwangsdynamisierung wird durch die Multiprozessor-Systemstruktur auf Fehler überwacht.
